(19) Europäisches Patentamt
European Patent Office
Office européen des brevets

(11) Veröffentlichungsnummer: **0 398 265 A1**

# (12) EUROPÄISCHE PATENTANMELDUNG

(21) Anmeldenummer: **90109158.7**

(51) Int. Cl.5: **B30B 1/18**

(22) Anmeldetag: **15.05.90**

Geänderte Patentansprüche gemäss Regel 86 (2) EPÜ.

(30) Priorität: **16.05.89 DE 3915860**

(43) Veröffentlichungstag der Anmeldung: **22.11.90 Patentblatt 90/47**

(84) Benannte Vertragsstaaten: **AT BE CH DE DK ES FR GB GR IT LI LU NL SE**

(71) Anmelder: **Bêché & Grohs GmbH**
**Peterstrasse 75**
**D-5609 Hückeswagen/Rhld.(DE)**

(72) Erfinder: **Claasen, Karl Hermann**
**Bruchstrasse 69a**
**D-4130 Moers 2(DE)**

(74) Vertreter: **Müller, Enno et al**
**Rieder & Partner Corneliusstrasse 45**
**D-5600 Wuppertal 11(DE)**

## (54) Spindelpresse.

(57) Die Erfindung betrifft eine Spindelpresse (1) mit einem Pressengestell (9), einem in der gleichen Drehrichtung ununterbrochen umlaufenden Schwungrad (6), einer zwischen dem Schwungrad (6) und einer Spindel (3) angeordneten, druckmittelbetätigbaren Kupplung (5), die nur während des Abwärts- und teilweise während des Arbeitshubes eine Verbindung zwischen dem Schwungrad (6) und der Spindel (3) herstellt, einer in einem Stößel (2) aufgenommenen, mit der Spindel (3) zusammenwirkenden Spindelmutter (7) und einer Einrichtung (4) zur Zurückbewegung des Stößels (2), wobei das Schwungsrad (6) über ein Axiallager (10) an dem Pressengestell (9) abgestützt ist. Zu einer möglichst einfachen Gestaltung bei guter Anpassung an die Anforderungen des Pressenbetriebes schlägt die Erfindung vor, daß zugeordnet dem Axiallager (10) ein mit Hydraulikflüssigkeit füllbarer Druckraum (11) zur Aufnahme der Axiallast des Schwungrades (6) ausgebildet ist, daß ein vertikaler Abstand (v) des Druckraumes (11) entsprechend der Größenordnung einer Axialbewegung des Pressengestells (9) bei einem Arbeitshub des Stößels (2) einstellbar und unter einer Arbeitshub-Belastung zum Ausgleich einer Axialbewegung des Pressengestells (9) veränderbar ist.

15'' 14 18 16
17
36
15
14' 16' 27
15'
26
24
25
6
18'
3
13
22 -9-
23
19
FIG.2

EP 0 398 265 A1

Die Erfindung betrifft eine Spindelpresse mit einem Pressengestell, einem in der gleichen Drehrichtung ununterbrochen umlaufenden Schwungrad, einer zwischen dem Schwungrad und einer Spindel angeordneten, druckmittelbetätigbaren Kupplung, die nur während des Abwärts- und teilweise während des Arbeitshubes eine Verbindung zwischen dem Schwungrad und der Spindel herstellt, einer in einem Stößel befindlichen, mit der Spindel zusammenwirkenden Spindelmutter und einer Einrichtung zur Zurückbewegung des Stößels. Das Schwungrad der Spindelpresse ist über ein Axiallager an dem Pressengestell abgestützt.

Eine Spindelpresse mit den vorstehend aufgeführten Merkmalen ist bspw. grundsätzlich aus der DE-PS 33 37 089 bekannt. Bei dieser bekannten Spindelpresse ist das Axiallager zwischen dem Schwungrad und dem Pressengestell durch ein Kugellager gebildet. Die umlaufende Schwungrad-Lagerfläche und die feststehende Gestell-Lagerfläche sind jeweils unmittelbar in das Pressengestell bzw. das Schwungrad eingepaßt.

Bei einem Arbeitszyklus der Spindelpresse treten im Zuge eines Arbeitshubes des Stößels sehr hohe Kräfte auf. Eine solche Spindelpresse kann bspw. in einem Nennkraftbereich von 60 MN und mehr arbeiten. Während des Arbeitshubes des Stößels wird im Bereich der Maximalkraft aufgrund der Reaktionskräfte das Pressengestell angehoben. Der Gestellbereich oberhalb des Spindelspurlagers bewegt sich hierbei in wenigen ms, also praktisch schlagartig, in der Größenordnung von mm nach oben. Diese schlagartige Bewegung überträgt sich über das Axiallager auf das Schwungrad, das am Gesamtgewicht der Spindelpresse einen sehr hohen Anteil bildet. Die Bewegung des Pressenge stells bringt somit eine hohe, nicht genau berechenbare Belastung auf das Axiallager zwischen dem Schwungrad und dem Pressengestell. Hierdurch ist die Lebensdauer des Axiallagers beeinträchtigt, bzw. eine auf solche schlagartigen Beanspruchnungen ausgelegte Dimensionierung des Lagers erforderlich. Das Axiallager ist aufgrund der gegebenen Beanspruchungen ein sehr teures und auch gewöhnlich mit langer Lieferzeit behaftetes Maschinenteil.

Ausgehend von dem zuvor dargestellten Stand der Technik stellt sich der Erfindung die Aufgabe, eine Spindelpresse mit einem in gleicher Drehrichtung ununterbrochen umlaufenden Schwungrad anzugeben, bei der das Axiallager zwischen dem Schwungrad und dem Pressengestell bei konstruktiv möglichst einfacher Gestaltung den Anforderungen des Pressenbetriebes möglichst gut angepaßt ist.

Diese Aufgabe ist bei der im Anspruch 1 angegebenen Erfindung gelöst.

Erfindungsgemäß ist vorgesehen, daß zugeordnet dem Axiallager ein mit Hydraulikflüssigkeit füllbarer Druckraum zur Aufnahme der Axiallast des Schwungrades ausgebildet ist, daß der vertikale Abstand des Druckraumes entsprechend der Größenordnung einer Axialbewegung des Pressengestells bei einem Arbeitshub des Stößels einstellbar ist und daß unter einer Arbeitshub-Belastung der vertikale Abstand zum Ausgleich einer Axialbewegung des Pressengestells veränderbar ist. Hierbei kann der Druckraum oberhalb oder unterhalb des Axiallagers angeordnet sein, oder auch, wie weiter bevorzugt vorgesehen und nachstehend auch im einzelnen beschrieben, selbst das Axiallager bilden. Eine Zuordnung unterhalb des Axiallagers kann bspw. dadurch gegeben sein, daß ein unteres Lagerteil des Axiallagers einen oberen Abschluß des Druckrau mes bildet. Bspw. kann also der untere Lagerring eines Kugel- oder Rollenlagers gleichsam seinerseits schwimmend auf einem Hydraulikflüssigkeit-Bett gelagert sein. Die Axialbewegung des Pressengestells bei einem Arbeitshub des Stößels kann im Bereich mehrerer mm liegen. Entsprechend muß die vertikale Erstreckung des Druckraumes in der Größenordnung von mehreren mm gewählt sein. Der Druckraum, der entsprechend den Lagergeometrien bspw. kreisringförmig ausgebildet ist, muß daher eine Decke oder einen Boden besitzen, die in ihrem Abstand gegeneinander um bis zu mehrere mm veränderbar sind. Bei der bevorzugten Ausgestaltung, bei der der Druckraum zwischen der (umlaufenden) Schwungrad-Lagerfläche und der (feststehenden) Gestell-Lagerfläche ausgebildet ist, ist gleichsam ein überdimensioniertes hydrostatisches Lager ausgebildet. Während aber ein hydrostatisches Lager gewöhnlich eine Hydraulikflüssigkeit-Schichtdicke im Bereich weniger Hundertstel mm aufweist, liegt die Hydraulikflüssigkeit-Schichtdicke, d.h. die vertikale Erstreckung des Druckraumes, hier im Bereich mehrerer mm. In weiterer Ausgestaltung ist vorgesehen, daß der Druckraum mit einem Ausgleichsraum kommuniziert, indem bei einer Arbeitshub-Belastung Hydraulikflüssigkeit kurzzeitig speicherbar ist, um eine Veränderung des vertikalen Abstandes zwischen der Druckraumdecke und dem Druckraumboden bzw. speziell der Schwungrad-Lagerfläche und der Gestell-Lagerfläche zu ermöglichen. Alternativ kann die Ausgestaltung auch so getroffen sein, daß die Axialbewegung durch die Kompressibilität der Hydraulikflüssigkeit ausgeglichen wird und daß die Dimensionierung des Ausgleichraumes entsprechend getroffen ist. Wenn auch Hydraulikflüssigkeit nur sehr wenig kompressibel ist, reicht die gegebene Kompressibilität bei entsprechender Dimensionierung des Ausgleichraumes doch aus, um die Vertikalbewegung des Pressengestells auszugleichen.

Je nach Dimensionierung des Ausgleichraumes kann hierbei auch noch eine Anhebung des Schwungrades auftreten, jedoch gedämpft durch die Kompressibilität und damit verursachte Einfederung des Druckraumes. Eine alternative Ausgestaltung bezüglich des Ausgleichraumes sieht vor, daß dieser aus einem Zylinderraum besteht, in dem ein federgestützter Kolben angeordnet ist. Die Federkraft, die den Kolben abstützt, ist dabei bevorzugt so eingestellt, daß bei einer Höchstbelastung während des Arbeitshubes eine Einfederung des Kolbens erfolgt. Die Federbelastung kann zunächst durch eine auf den dem Druckraum abgewandten Kolbenboden wirkende Spiralfeder realisiert sein. Darüber hinaus kann der Kolbenboden aber auch durch eine einfederbare Flüssigkeit oder ein Gasdruckpolster beaufschlagt sein. Um die erforderliche Veränderbarkeit der vertikalen Erstrekkung des Druckraumes zu realisieren, kann nach einer weiteren Ausgestaltung, die u.U. auch kombiniert mit einer vorbeschriebenen Maßnahme ausgeführt sein kann, vorgesehen sein, daß der Druckraum mit einem Überdruckventil kommuniziert, zur Abspritzung von Hydraulikflüssigkeit bei einer Höchstbelastung während des Arbeitshubes. Das Überdruckventil läßt bis zu einem bestimmten Druck eine Veränderung des Volumens und damit der vertikalen Erstreckung des Druckraumes nicht zu. Sobald dieser Druck überschritten wird, öffnet sich das Überdruckventil und Hydraulikflüssigkeit wird abgespritzt. Dieser Druck wird geeigneterweise so gewählt, daß es praktisch nicht oder nicht in bedeutendem Ausmaß zu einem Anheben des Schwungrades bei einem Arbeithub des Stößels kommt. Im einzelnen kann das Überdruckventil durch ein vorgespannt auf die Gestell-Lagerfläche wirkendes, bei Erreichen einer Höchstlast abhebendes Verschlußteil ausgebildet sein, das unmittelbar angrenzend an die Schwungrad-Lagerfläche angeordnet ist. Dieses Verschlußteil kann angepaßt an die Geometrie des Lagers ein Verschlußring sein.

Die erwähnte Hydraulikflüssigkeit kann ein übliches, für hydrostatisches Lager bei hohen Drücken gewähltes Hydrauliköl sein.

Nachstehend ist die Erfindung noch des weiteren anhand der beigefügten Zeichnung, die jedoch lediglich Ausführungsbeispiele darstellt, erläutert. Hierbei zeigt:

Fig. 1 eine Vorderansicht, teilweise geschnitten, einer Spindelpresse;

Fig. 2 eine vergrößerte Ausschnitts-Darstellung des Lagerungsbereiches Schwungrad/Pressengestell gemäß einer ersten Ausführungsform;

Fig. 3 eine vergrößerte Detailansicht der Darstellung gemäß Fig. 2;

Fig. 4 eine vergrößerte Ausschnitts-Darstellung des Lagerungsbereiches Schwungrad/Pressengestell gemäß einer weiteren Ausführungsform;

Fig. 5 eine vergrößerte Detaildarstellung des in Fig. 4 dargestellten Axiallagers;

Fig. 6 eine vergrößerte Ausschnitts-Darstellung des Lagerungsbereiches Schwungrad/Pressengestell gemäß einer dritten Ausführungsform der Erfindung;

Fig. 7 eine vergrößerte Detaildarstellung des Axiallagers gemäß Fig. 6;

Fig. 8 eine vergrößerte Ausschnittsdarstellung des Lagerungsbereiches Schwungrad/Pressengestell gemäß einer vierten Ausführungsform;

Fig. 9 eine vergrößerte Ausschnitts-Darstellung des Lagerungsbereiches Schwungrad/Pressengestell gemäß einer weiteren Ausführungsform;

Fig. 10 eine Draufsicht auf den Gegenstand gemäß Fig. 9 entlang der Linie X-X;

Fig. 11 eine weitere Ausführungsform, im stationären Betrieb und

Fig. 12 die Ausführungsform gemäß Fig. 11 unter Belastung.

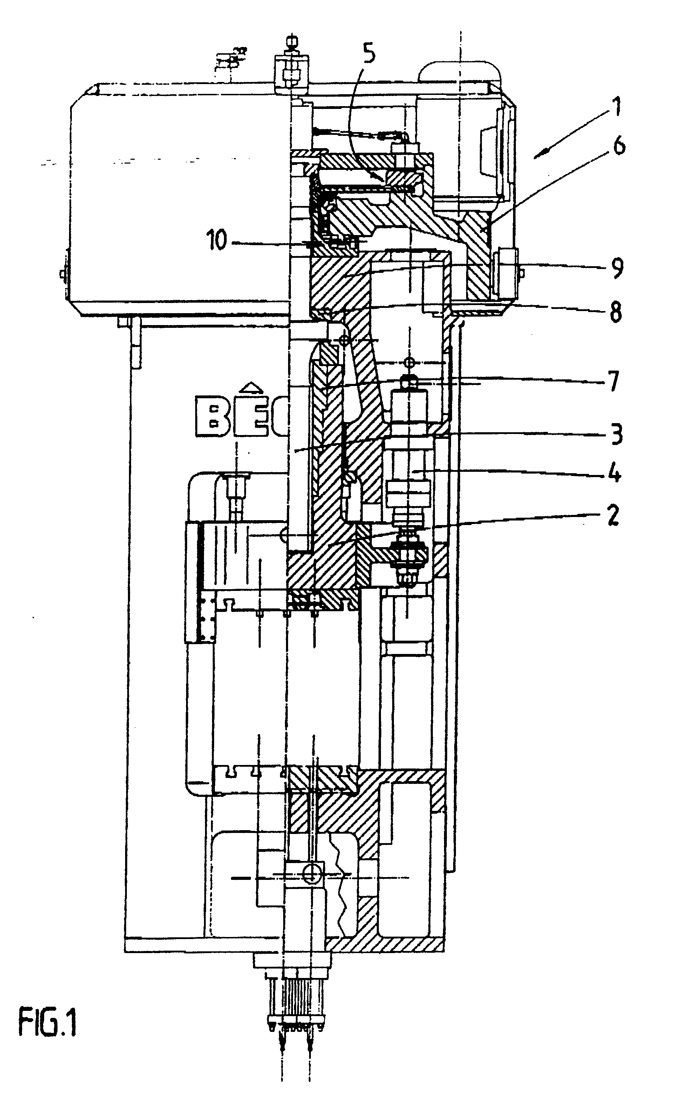

Dargestellt und beschrieben ist, zunächst mit Bezug zu Fig. 1, eine Spindelpresse 1 mit einem Stößel 2, der mittels einer Spindel 3 zur Durchführung eines Umformvorganges bewegbar ist. Der heruntergefahrene Stößel 2 ist mittels Hydraulikzylinder 4 wieder in seine Ausgangslage zurückbewegbar. Die Spindel 3 ist über eine Kupplung 5 mit einem Schwungrad 6 zur Durchführung eines Arbeitshubes koppelbar. Bei der dargestellten Ausführungsform wird die Kraft bzw. Energie zur Bewegung des Stößels 2 beim Umformvorgang aus dem Schwungrad 6 geholt. Das Schwungrad 6 läuft ständig um und wird nur während des Abwärts- und teilweise während des Arbeitshubes mit der Spindel 3 vermittels der Kupplung 5 verbunden.

Die Spindel 3 ist mit einer Spindelmutter 7 gelagert, die in dem Stößel 2 aufgenommen ist. Des weiteren ist die Spindel 3 mittels eines Spurlagers 8 bezüglich des Pressengestells 9 gelagert.

Bei heruntergefahrenem Stößel 2 ergibt sich während eines Arbeitshubes kurzzeitig eine hohe Rückstellkraft in dem Spurlager 8, die das Pressengestell 9, insbesondere den oberhalb des Spurlagers 8 befindlichen Bereich des Pressengestells 9 anzuheben sucht und auch in wesentlichem Ausmaß bewegt. In der Praxis können hier Bewegungen bis zu einigen mm auftreten.

Das Schwungrad 6 ist auf dem Pressengestell 9 mittels eines Axiallagers 10 gelagert. Gewöhnlich ist das Axiallager 10 kreisringförmig ausgebildet.

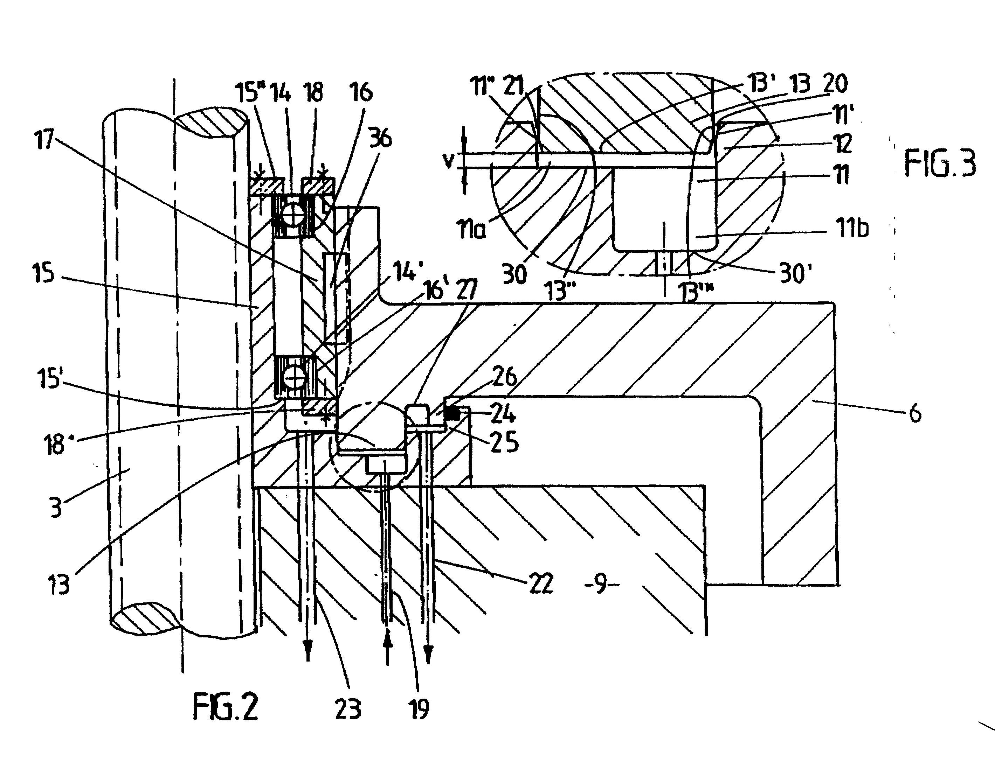

Zum Ausgleich der Axialbewegung ist gemäß einer ersten, in den Fig. 2 und 3 dargestellten Ausführungsform vorgesehen, daß das Axiallager als ein mit Hydraulikflüssigkeit füllbarer Druckraum 11 ausgebildet ist und daß der vertikale Abstand v des Druckraumes entsprechend der Größenordnung einer Axialbewegung des Pressengestells 9 bei einem Arbeitshub des Stößels 2 eingestellt ist. Bspw. kann v 2 - 3 mm betragen.

Die obere Abdeckung des kreisringförmigen Druckraumes 11 wird durch den in den Ringraum 12 eintauchenden umlaufenden Abschnitt 13 des Schwungrades 6 gebildet. Die untere Fläche des Abschnitts 13 bildet eine Schwungrad-Lagerfläche 13′. Unterhalb des sich über die gesamte Breite des Abschnitts 13 erstreckenden Druckraum-Bereiches 11a ist teilweise ein Ausgleichsraum 11b ausgebildet, der zum Ausgleich der Vertikalbewegung dient. Das Volumen an Hydraulikflüssigkeit in dem Druckraum 11 ist vermittels des Ausgleichraumes 11b so groß, daß die Kompressibilität der Hydraulikflüssigkeit ausreicht, die Vertikalbewegung v, die bei einem Arbeitshub auftritt, auszugleichen. Der obere Absatz des Druckraumes 11 bildet hierbei eine (feststehende) Gestell-Lagerfläche 30. Ggf. kann auch der Boden 30′ des Ausgleichsraumes 11b also solche betrachtet werden.

Im einzelnen ist in Fig. 2 noch zu erkennen, daß das Schwungrad 6 vermittels Radial-Kugellager 14, 14′ an einem im Querschnitt L-förmigen Flansch 15 gelagert ist. Der Flansch 15 umgibt die Spindel 3 und lagert diese. Die Radial-Kugellager 14, 14′ sind durch Ausnehmungen 16, 16′ in einem Kopplungsteil aufgenommen, das über eine Keilverbindung 36 mit dem Schwungrad 6 gekuppelt ist. Die Ausnehmungen 16, 16′ sorgen zusammen mit den Halterungsflanschen 18, 18′ für die vertikale Lagesicherung der Kugellager 14, 14′. Bei dem Flanschteil 15 sind die Kugellager gleichfalls durch eine Auflageschulter 15′ bzw. einen Halterungsflansch 15″ gesichert.

Der das hydrostatische Lager bildende Druckraum 11 besitzt eine Zuleitung 19 zur Beaufschlagung des Druckraumes 11 mit Hydraulikflüssigkeit unter dem erforderlichen Druck. Der Druck ist vorrangig entsprechend dem Gewicht des Schwungrades 6 zu wählen. Über die Dichtungsstellen 20 und 21 zwischen Zylinderraum 12 und dem Abschnitt 13 kann betrieblich, insbesondere bei einem vertikalen Zusammenfedern des Druckraumes, Hydraulikflüssigkeit austreten. Diese Hydraulikflüssigkeit kann über die Leitungen 22 und 23 abgeleitet werden.

Der Raum zwischen dem Schwungrad 6 und dem Flanschteil 15 ist des weiteren durch die Dichtung 24 abgedichtet, die in einem hochgezogenen Randbereich 25 des Flanschteiles 15 ausgebildet ist. Die Dichtung 24 wirkt gegen einem umlaufenden zweiten Abschnitt 26 des Schwungrades 6, der kreisförmig zu dem Abschnitt 13 mit Abstand ausgebildet ist. Zwischen dem umlaufenden zweiten Abschnitt 26 und dem Teil 13 ist eine Aussparung 27, umlaufend, ausgebildet.

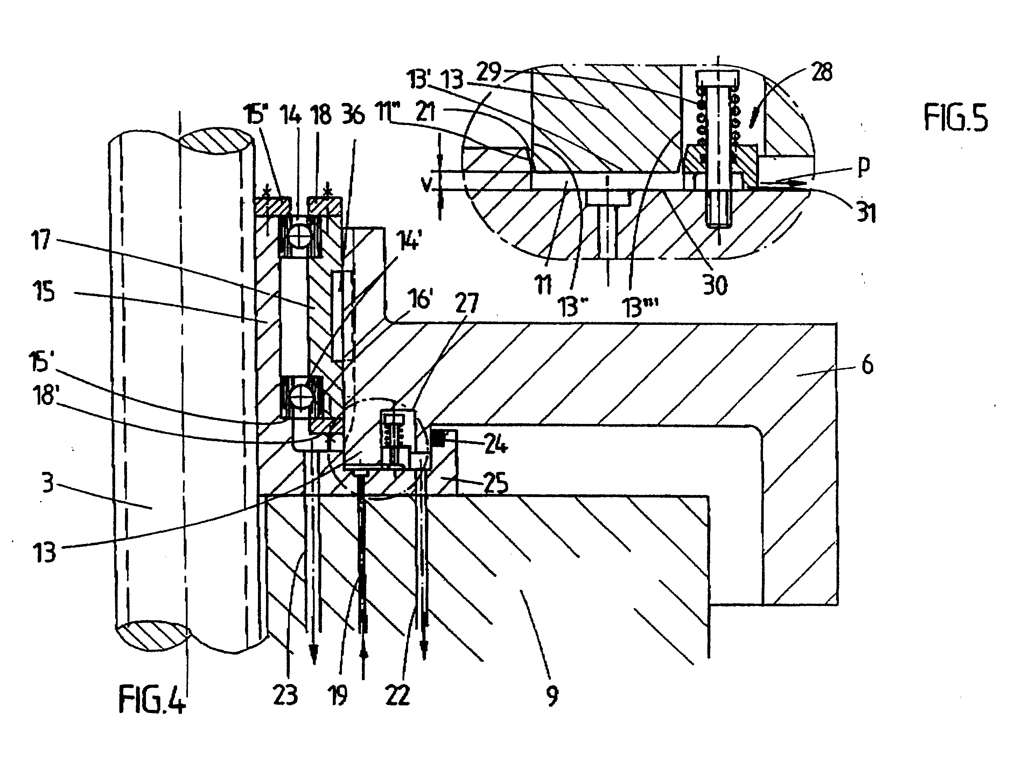

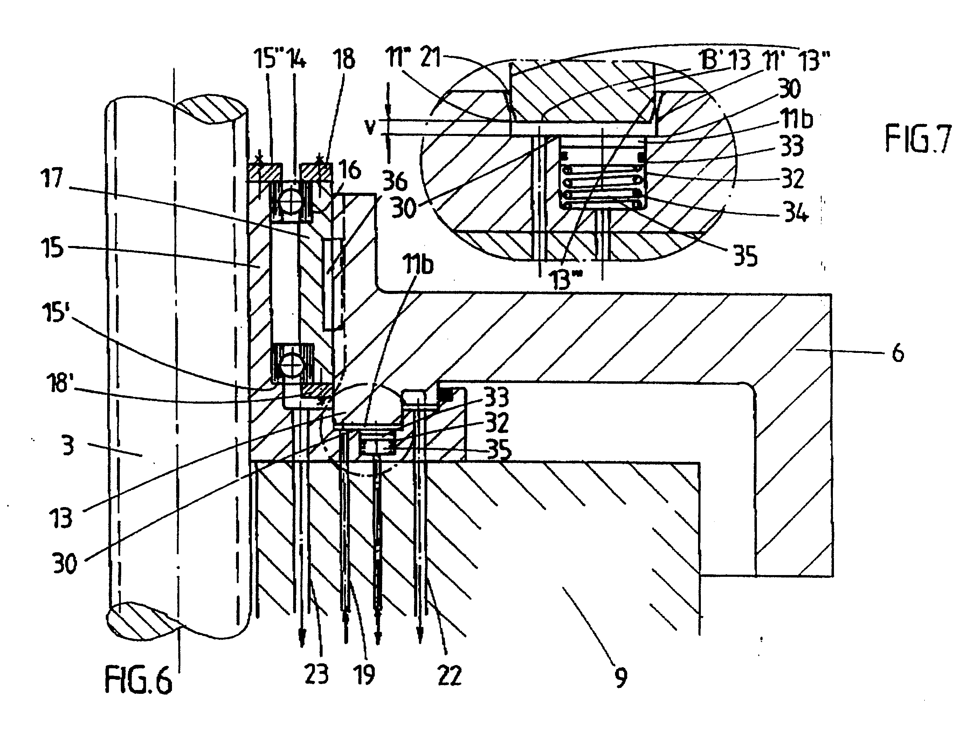

Bei dem Ausführungsbeispiel gemäß den Fig. 4 und 5 sind gleiche Teile mit gleichen Bezugszeichen bezeichnet. Bezüglich der Beschreibung wird auf die vorstehenden Ausführungen verwiesen, soweit sich nicht aus nachstehenden Ausführungen Abweichungen ergeben.

Im Gegensatz zu der Ausführungsform gemäß den Fig. 2 und 3 wird bei dieser Ausführungsform die Veränderung der vertikalen Erstreckung des Druckraumes durch ein Abspritzen von Hydraulikflüssigkeit über ein Überdruckventil 28 ermöglicht. Das Überdruckventil 28 ist durch ein vorgespannt mittels der Druckfeder 29 auf die Gestell-Lagerfläche 30 wirkendes Verschlußteil 31 gebildet. Das Verschlußteil 31 hebt bei Erreichen eines bestimmten, einstellbaren Druckes ab, so daß Hydraulikflüssigkeit an einem sich ergebenden Spalt austreten kann, wie dies durch den Pfeil P angedeutet ist. Das Überdruckventil 28 ist in dem Aussparungsraum 27 angeordnet. Es ist ersichtlich, daß der Druckraum 11 bei diesem Ausführungsbeispiel kleiner ausgebildet ist, in vertiakler Erstreckung im wesentlichen nur angepaßt an den notwendigen Abstand v. Das Verschlußteil 31 kann kreisringförmig ausgebildet sein oder es können auch mehrere Absperrventile 28 vorgesehen werden. Im letzteren Fall ist im übrigen eine feststehenden Begrenzung des Druckraumes 11 über den Umfang gegeben.

Bei dem Ausführungsbeispiel gemäß den Fig. 6 und 7 sind wiederum gleiche Teile entsprechend den vorstehend beschriebenen Ausführungsbeispielen bezeichnet. Insofern wird wiederum auf die vorstehende Beschreibung verwie sen, soweit sich nicht aus Nachstehendem Abweichungen ergeben.

Bei diesem Ausführungsbeispiel ist der Druckraum 11b durch einen in einem Zylinderraum 32 laufenden Kolben 33 ersetzt. Der Kolben 33 ist bspw. durch eine Spiralfeder 34 abgefedert. In dem unteren Kolbenraum 35 kann aber auch ein Gasdruck wirksam sein. Die Federkraft der Spiralfeder 34 bzw. ein Gasdruck ist so eingestellt, daß bei einem Überdruck, der sich durch eine Anhebung des Pressengestells 9 während einer Höchstlast bei einem Arbeitshub des Stößels 2 ergibt, der Kolben 33 nach unten ausweicht und sich die vertikale Ersteckung v des Druckraumes im wesentlichen entsprechend einer Anhebung des Pressengestells 9 verringert. Das hierbei in den Druckraum 11b geflossene Hydrauliköl wird bei einem Zurückfedern des Pressengestells 9 sogleich wieder in den Druckraum 11a gepreßt.

Bei allen Ausführungsbeispielen ist eine obere Abdichtung des Druckraumes 11 zwischen gestellfesten Seitenwänden 11′ und 11″ sowie Seitenflächen 13″ und 13‴ des Abschnitts 13 gegeben.

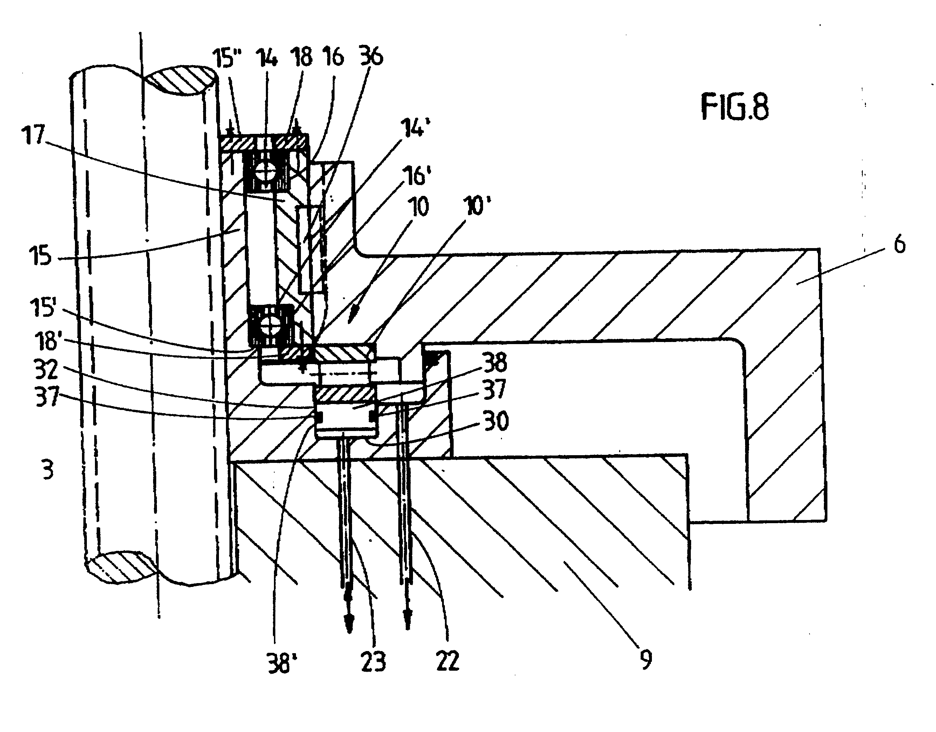

Bei dem Ausführungsbeispiel gemäß Fig. 8 kann der Ausgleich der Axialbewegung grundsätzlich gemäß einer der vorbeschriebenen Möglichkeiten gestaltet sein. Wesentlich bei Fig. 8 ist, daß das Axiallager 10 als festes Lager, beispielsweise Wälzlager, ausgebildet ist. In der Praxis ist dies etwa ein Axial-Zylinderrollen-Lager. An den unteren Lagerring 10′ ist ein ringförmiger Kolben 38 angeformt bzw. unmittelbar mit diesem verbunden. Zwischen einer unteren Kolbenfläche 38′ und der Gestell-Lagerfläche 30 ist der Druckraum 11 ausgebildet. Der Kol ben 38 ist in dem Zylinderraum 32 aufgenommen und gegenüber diesem über Dichtungsringe 37 abgedichtet.

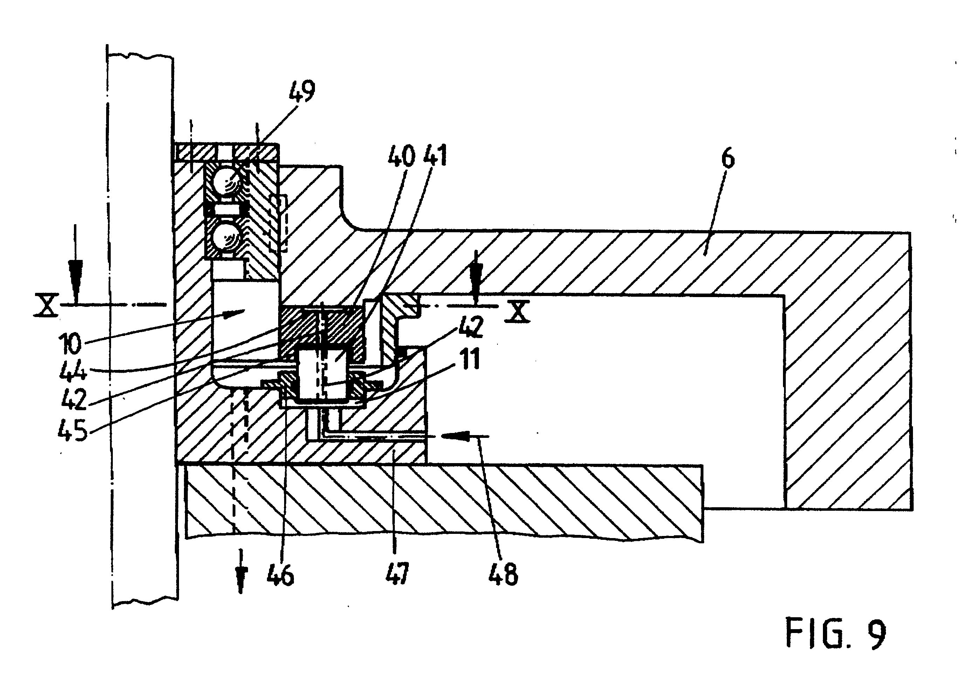

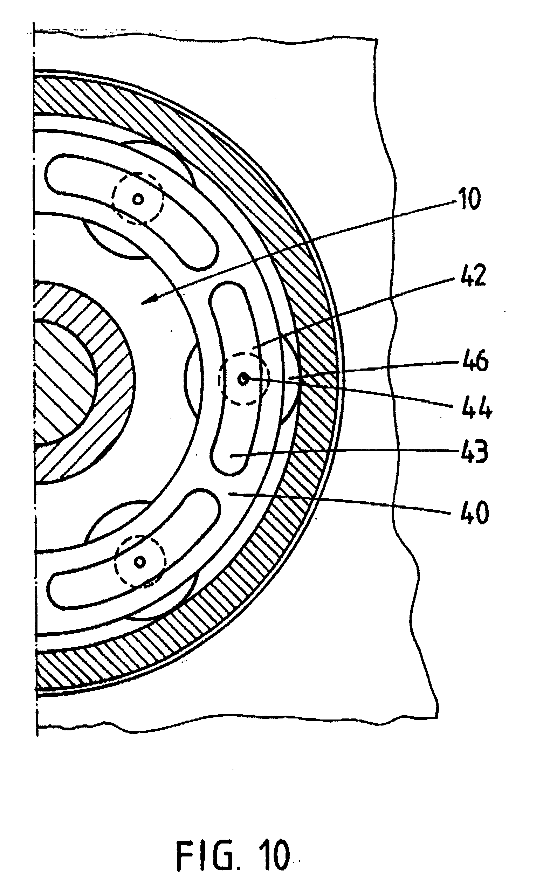

Bei der Ausführungsform gemäß den Figuren 9 und 10 ist als Axiallager ein hydrostatisches Lager ausgebildet. Dieses hydrostatische Lager besteht zunächst aus einem als Ringteil ausgebildeten Lagerteil 40, das gesonderte Lagerungsbereiche 43 aufweist. Es können etwa sechs Lagerungsbereiche 43 über den Umfang vorgesehen sein. Diese Lagerungsbereiche zeichnen sich durch eine schalenförmige Ausnehmung 44 aus. Das Lagerteil 40 wird wie ein bekanntes hydrostatisches Lager durch die Bohrung 42 mit Hydraulikflüssigkeit, die unter Druck steht, versorgt. Es bildet sich ein Schmierfilm, der in üblicher Weise etwa eine Dicke von 5-7μm aufweist.

Das Lagerteil 40 ist weiter über ein zylindrisches Zwischenteil 41 in dem Druckraum 11 abgestützt. Auch das zylindrische Zwischenteil 41 besitzt eine Durchgangsbohrung 42, die mit der Durchgangsbohrung 42 des Lagerteils 40 fluchtend ausgerichtet ist. Weiter ist das zylindrische Zwischenteil 41 formschlüssig, mittels einer zylinderförmigen Ausnehmung 45 in dem Lagerteil 40 gehaltert. Des weiteren ist das Zwischenteil 42 über ein Lagerteil 46, das am Pressengestell 47 fest angebracht ist, gehaltert. Das Lagerteil 46 besitzt eine an das Zwischenteil 41 angepaßte Durchgangsbohrung. Das Zwischenteil 41 ist in dieser Duruchgangsbohrung abgedichtet geführt.

Der Druckraum 11 entspricht in seiner Funktion den vorbeschriebenen Druckräumen 11. Über eine einzige Zuleitung 48 wird sowohl der Druckraum 11 wie auch das hydrostatische Axiallager 10 mit Hydraulikflüssigkeit versorgt. Aufgrund der in den Druckraum 11 eingeschlossenen Menge an Hydraulikflüssigkeit kann bei einem harten Stoß oder dergleichen aufgrund der gegebenen Kompressibilität der Hydraulikflüssigkeit ein Ausgleich geschaffen werden. Dieser kann größenordnungsmäßig etwa bis zu 1mm Bewegung ausgleichen.

Um eine größere Menge Hydraulikflüssigkeit in dem Druckraum 11 unterzubringen, ist dieser auch mit einem größeren Durchmesser als das zylinderförmige Zwischenteil 41 ausgebildet.

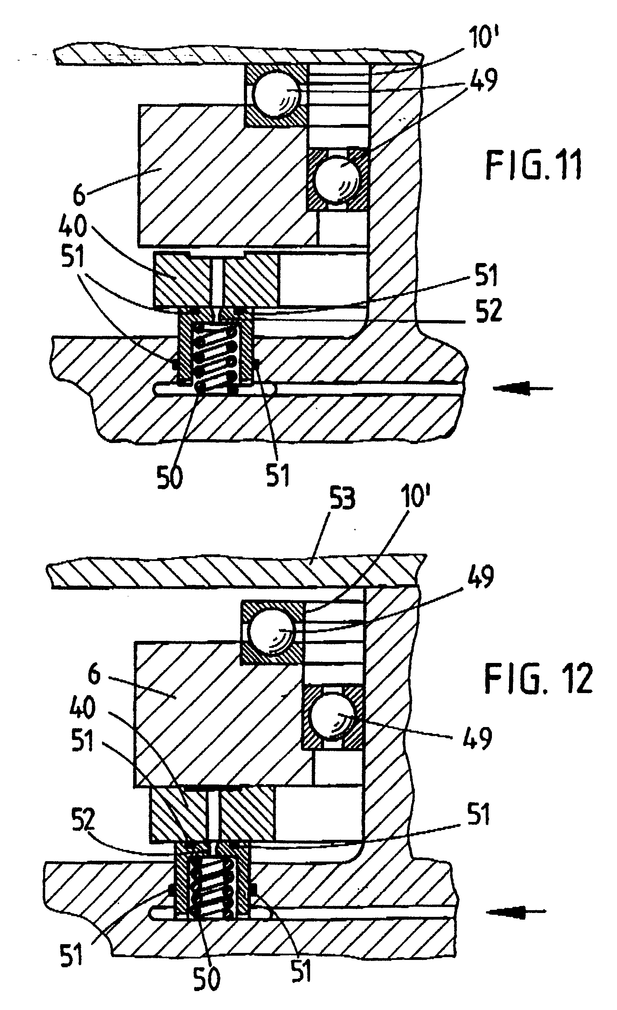

Im übrigen kann in der Zuleitung 48, gegebenenfalls unmittelbar vor dem Druckraum 11, wie bei einem hydrostatischen Lager an sich bekannt, noch eine Drossel vorgesehen sein. Bevorzugt ist dies jedoch nicht der Fall. Wesentlich ist eine Drosselwirkung strömungsmäßig nach dem Druckraum 11 und vor dem hydrostatischen Axiallager 10, wie dies in den Fig. 11 und 12 noch deutlicher dargestellt ist. Eine Bewegung des Zwischenteils 41 kann durch einen mit dem Lagerteil 46 zusammenwirkenden Anschlag begrenzt sein. Bevorzugt ist jedoch der Anschlag bzw. eine Bewegungsbegrenzung durch ein weiteres Axiallager oberhalb des Schwungrades ausgebildet (vgl. Prinzipdarstellung in Fig. 11 und 12).

Bei der Ausführungsform nach den Figuren 11 und 12 ist zusätzlich in dem Druckraum 11, welcher hier im übrigen durch eine hohle Ausführung des Zwischenteils 41 wesentlich geschaffen ist, eine Druckfeder 50 angeordnet. Es ist lediglich angedeutet, daß das Zwischenteil 41 gegen das lagerteil 40 und das Gestell 47 durch Dichtungen abgedichtet ist (bei 51).

Das Axiallager 10′ ist hier als Kugellager dargestellt. Es kann aber auch als (weiteres) hydrostatisches Lager ausgebildet sein. Ebenso das Radiallager 49. Bei 53 ist ein oberer Festanschlag des Pressengestells angedeutet, gegen welchen das Axiallager 10′ wirkt.

Im übrigen ist - übertrieben - in Fig. 12 die Anordnung bei einem harten Schlag dargestellt, während das Axiallager 10′ von dem Anschlag 53 distanziert ist.

Im übrigen ist in dieser Darstellung das Schwungrad 6 nur schematisch angedeutet.

Wesentlich ist die Drossel 52, die zur Abhebunbg des Zwischenteils 41 bei Beaufschlagung mit Hydraulikdruck führt.

Die Druckfeder 50 übt eine geringere Kraft aus, als es zur Beabstandung bzw. zur Anhebung des Lagers mit dem Schwungrad notwendig ist. Der Druck der Hydraulikflüssigkeit zusammen mit der Druckfeder führt sodann zur Anhebung.

Im übrigen ist das Schwungrad 6 in an sich bekannter Weise über ein Radialkugellager 49 radial gelagert.

Die in der vorstehenden Beschreibung, der Zeichnung und den Ansprüchen offenbarten Merkmale der Erfindung können sowohl einzeln als auch in beliebiger Kombination für die Verwirklichung der Erfindung von Bedeutung sein. Alle offenbarten Merkmale sind erfindungswesennetlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen.

## Ansprüche

1. Spindelpresse (1) mit einem Pressengestell (9), einem in der gleichen Drehrichtung ununterbrochen umlaufenden Schwungrad (6), einer zwischen dem Schwungrad (6) und einer Spindel (3) angeordneten, druckmittelbetätigbaren Kupplung (5), die nur während des Abwärts- und teilweise während des Arbeitshubes eine Verbindung zwischen dem Schwungrad (6) und der Spindel (3) herstellt, einer in einem Stößel (2) aufgenommenen, mit der Spindel (3) zusammenwirkenden Spindelmutter (7) und einer Einrichtung (4) zur Zurückbewegung des Stößels (2), wobei das Schwungrad (6) über ein Axiallager (10) an dem Pressengestell (9) abgestützt ist, dadurch gekennzeichnet, daß zugeordnet dem Axiallager (10) ein mit Hydraulikflüssigkeit füllbarer kolben-/zylinderartiger Druckraum (11) zur Aufnahme der Axiallast des Schwungrades (6) ausgebildet ist, daß ein vertikaler Abstand (v) des Druckraumes (11) entsprechend der Größenordnung einer Axialbewegung des Pressengestells (9) bei einem Arbeitshub des Stößels (2) einstellbar und unter einer Arbeitshub-Belastung zum Ausgleich einer Axialbewegung des Pressengestells (9) veränderbar ist.

2. Spindelpresse, insbesondere nach Anspruch 1, dadurch gekennzeichnet, daß der Druckraum (11) unterhalb des Axiallagers (10) ausgebildet ist und daß ein unteres Lagerteil einen oberen Abschluß des Druckraumes (11) bildet.

3. Spindelpresse, insbesondere nach Anspruch 1 oder 2, dadurch gekennzeichnet, daß der Druckraum (11) zwischen der Schwungrad-Lagerfläche (13′) und der Gestell-Lagerfläche (30) ausgebildet ist und daß der Abstand (v) zwischen der Schwungrad-Lagerfläche (13′) und der Gestell-Lagerfläche (30) einstellbar ist.

4. Spindelpresse, insbesondere nach einem der Ansprüche 1 - 3, dadurch gekennzeichnet, daß der Druckraum (11) mit einem Ausgleichsraum (11b) kommuniziert, in welchem bei einer Arbeitshub-Belastung Hydraulikflüssigkeit kurzfristig speicherbar ist, um eine Veränderung des vertikalen Abstandes (v) zwischen der Schwungrad-Lagerfläche (13′) und der Gestell-Lagerfläche (30) zu ermöglichen.

5. Spindelpresse, insbesondere nach einem der Ansprüche 1 - 4, dadurch gekennzeichnet, daß die Axialbewegung durch die Kompressibilität der Hydraulikflüssigkeit ausgeglichen wird und daß die Dimensionierung des Ausgleichsraumes (11b) entsprechend getroffen ist.

6. Spindelpresse, insbesondere nach einem der Ansprüche 1 - 4, dadurch gekennzeichnet, daß der Ausgleichsraum (11b) aus einem Zylinderraum (32) besteht, in dem ein federgestützter Kolben (33) angeordnet ist, wobei die Federkraft so eingestellt ist, daß bei einer Höchstbelastung während des Arbeitshubes eine Einfederung des Kolbens (33) erfolgt.

7. Spindelpresse, insbesondere nach Anspruch 6, dadurch gekennzeichnet, daß der Zylinderraum (32) auf der Federseite des Kolbens (33) mit einem unter Druck stehenden Gas gefüllt ist.

8. Spindelpresse, insbesondere nach einem der Ansprüche 1 - 5, dadurch gekennzeichnet, daß der Druckraum (11) mit einem Überdruckventil (28) kommuniziert, zur Absprit zung von Hydraulikflüssigkeit bei einer Höchstbelastung während eines Arbeitshubes.

9. Spindelpresse, insbesondere nach Anspruch 8, dadurch gekennzeichnet, daß das Überdruckventil (28) durch ein vorgespannt auf die Gestell-Lagerfläche (30) wirkendes, bei Erreichen einer Höchstlast abhebendes Verschlußteil (31) ausgebildet ist, das unmittelbar angrenzend an die Schwungrad-Lagerfläche (13′) angeordnet ist.

10. Spindelpresse, insbesondere nach Anspruch 9, dadurch gekennzeichnet, daß das Verschlußteil (31) ein Verschlußring ist.

11. Spindelpresse, insbesondere nach einem oder mehreren der vorhergehenden Ansprüche, dadurch gekennzeichnet, daß das Axiallager (10) als hydrostatisches Lager ausgebildet ist, daß ein Lagerteil (40) des hydrostatischen Lagers (10) mittels eines kolbenartigen Zwischenteils (41) in dem Druckraum (11) durch die Hydraulikflüssigkeit abstützbar ist und daß das Zwischenteil (41) eine Durchgangsbohrung (42) aufweist, zur Durchleitung von Hydraulikflüssigkeit aus dem Druckraum (11) in das Axiallager (10).

12. Spindelpresse, insbesondere nach einem oder mehreren der vorhergehenden Ansprüche, dadurch gekennzeichnet, daß das Lagerteil (40) ein Ringteil ist.

13. Spindelpresse, insbesondere nach einem oder mehreren der vorhergehenden Ansprüche, dadurch gekennzeichnet, daß in dem Lagerteil (40) ein oder mehrere Lagerungsbereiche (43) ausgebildet sind.

14. Spindelpresse, insbesondere nach einem oder mehreren der vorhergehenden Ansprüche, dadurch gekennzeichnet, daß die Durchgangsbohrung (42) als Drossel wirkt.

15. Spindelpresse, insbesondere nach einem oder mehreren der vorhergehenden Ansprüche, dadurch gekennzeichnet, daß die Drossel einstellbar ist.

16. Spindelpresse, insbesondere nach einem oder mehreren der vorhergehenden Ansprüche, dadurch gekennzeichnet, daß das Zwischenteil (41) zylinderförmig ist.

17. Spindelpresse, insbesondere nach einem oder mehreren der vorhergehenden Ansprüche, dadurch gekennzeichnet, daß der Druckraum (11) mit einem größeren Durchmesser als das Zwischenteil (41) ausgebildet ist.

18. Spindelpresse, insbesondere nach einem oder mehreren der vorhergehenden Ansprüche, dadurch gekennzeichnet, daß das Zwischenteil (41) in dem Lagerteil (40) formschlüssig aufgenommen ist.

19. Spindelpresse, insbesondere nach einem oder mehreren der vorhergehenden Ansprüche, dadurch gekennzeichnet, daß in der Durchgangsbohrung (42) eine gesonderte Drossel (52) ausgebildet ist.

20. Spindelpresse, insbesondere nach einem oder mehreren der vorhergenden Ansprüche, dadurch gekennzeichnet, daß das Zwischenteil 41 mittels einer Druckfeder 50 gegenüber dem Pressengestell bzw. dem Boden des Druckraumes 11 distanzierbar ist.

Geänderte Patentansprüche gemäss Regel 86(2) EPÜ

21. Spindelpresse (1) mit einem Pressengestell (9), einem in der gleichen Drehrichtung ununterbrochen umlaufenden Schwungrad (6), einer zwischen dem Schwungrad (6) und einer Spindel (3) angeordneten, druckmittelbetätigbaren Kupplung (5), die nur während des Abwärts- und teilweise während des Arbeitshubes eine Verbindung zwischen dem Schwungrad (6) und der Spindel (3) herstellt, einer in einem Stößel (2) aufgenommenen, mit der Spindel (3) zusammenwirkenden Spindelmutter (7) und einer Einrichtung (4) zur Zurückbewegung des Stößels (2), wobei das Schwungrad (6) über ein Axiallager an dem Pressengestell (9) abgestützt ist, dadurch gekennzeichnet, daß das Axiallager (10) als hydrostatisches Lager ausgebildet ist und daß das Axiallager (10) durch eine Druckfeder (50) federnd abgestützt ist.

5
1
6
10
9
8
7
3
4
2

FIG.1

FIG.3
FIG.2
13' 13 20
11'
12
11
11b
30'
13'''
13''
30
11a
11'' 21
V
6
9
22
26
24
25
27
16'
14'
36
16
18
14
15''
19
23
17
15
15'
18'
3
13

13' 13 29
28
15" 14 18 36 11" 21
v
p
31
17
14'
15
11
13"
13'''
30
16' 27
6
15'
18'
24
3
25
13
23 19 22 9

FIG.5

FIG.4

FIG.7
FIG.6
6
9
3
13
15
15'
15"
14
16
17
18
18'
19
21
22
23
30
32
33
34
35
36
11b
11'
11"
13'
13"
13'"
v

FIG.8
15"
14
18
16
36
17
14'
16'
10
10'
15
6
15'
18'
32
37
38
37
30
3
38'
23
22
9

6
X
42
11
48
40 41
47
49
46
X
10
44
42
45

FIG. 9

10
42
46
44
43
40

FIG. 10

10'
49
FIG.11
6
40
51
51
52
50
51
53
10'
49
FIG. 12
6
40
51
49
52
51
51
50
51

Europäisches Patentamt

# EUROPÄISCHER RECHERCHENBERICHT

Nummer der Anmeldung

EP 90109158.7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 5) |
|---|---|---|---|
| Y | FR - A - 1 541 406 (HILLER & LUTZ) * Seite 1, Zeile 44 * -- | 1 | B 30 B 1/18 |
| Y | US - A - 4 333 692 (KRAUS) * Spalte 2, Zeilen 17,18 * -- | 1 | |
| A | GB - A - 2 061 813 (DISCHLER) * Seite 4, Zeilen 7-9 * ---- | 1 | |

RECHERCHIERTE SACHGEBIETE (Int Cl 5)

B 30 B
F 16 C

Der vorliegende Recherchenbericht wurde für alle Patentansprüche erstellt.

| Recherchenort | Abschlußdatum der Recherche | Prüfer |
|---|---|---|
| WIEN | 29-08-1990 | GLAUNACH |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument